# DEMANDE DE BREVET EUROPEEN

(11) **EP 0 945 655 A1**
(43) Date de publication de la demande: **29.09.1999**
(21) Numéro de dépôt: 99400706.0
(22) Date de dépôt: 23.03.1999
(51) Int. Cl.: F16J 15/32

(54) **Procédé pour assurer l'étanchéité entre deux pièces coaxiales d'un dispositif de commande hydraulique par exemple**

(30) Priorité: 25.03.1998 FR 9803676
(71) Demandeur: LE JOINT FRANCAIS, 75008 Paris (FR)
(72) Inventeur: Travers, Thierry, 53200 Aze (FR); Huaulme, Jean-Louis, 53200 Marigne-Peuton (FR)
(74) Mandataire: Doireau, Marc

(57) **Abrégé**

Procédé pour assurer l'étanchéité entre deux pièces coaxiales d'un dispositif de commande hydraulique par exemple, l'une des pièces (P1) étant mobile en translation par rapport à l'autre pièce (5) sous l'action exercée par un fluide sous pression, le procédé consistant à fabriquer un joint d'étanchéité annulaire (20) ayant une lèvre annulaire (L) qui comporte un angle vif ou arête (A), et à le monter entre les deux pièces (P1,5) et étant caractérisé en ce qu'il consiste :
- à fabriquer le joint (20) dans un moule en deux parties, avec des angles de dépouillle (r) mais sans contre-dépouilles, selon un plan de joint (Y-Y) perpendiculaire à l'axe (X-X) du joint (20), ledit joint (20) présentant une surface annulaire interne tronconique (S1) qui forme un angle (α) avec l'axe (X-X) du joint, et
- à monter le joint (20) dans une gorge périphérique (G) de l'une des deux pièces (P1) en le déformant par roulage sur lui-même de manière à compenser l'angle (α) précité.

## Description

La présente invention concerne un procédé pour assurer l'étanchéité entre deux pièces coaxiales d'un dispositif de commande hydraulique par exemple, l'une des deux pièces étant mobile en translation par rapport à l'autre pièce sous l'action exercée par la pression d'un fluide.

Lorsqu'un piston se déplace en translation à l'intérieur d'un cylindre sous l'action exercée par un fluide, on prévoit toujours un dispositif d'étanchéité entre le piston et le cylindre. Ce dispositif d'étanchéité est le plus souvent constitué par un joint annulaire en un matériau élastiquement déformable qui est logé dans une gorge périphérique du piston ou du cylindre.

Bien entendu, la forme donnée au joint d'étanchéité dépend notamment des conditions d'exploitation et des performances à satisfaire qui varient d'une application à l'autre.

Dans le cas d'un dispositif de commande hydraulique des mâchoires d'un frein à tambours pour un véhicule automobile par exemple, deux pistons montés coulissant dans un même cylindre sont déplacés simultanément par un fluide sous pression dans deux directions opposées pour commander les mâchoires du frein à partir de l'actionnement de la pédale de frein. L'étanchéité entre chaque piston et le cylindre est assurée par un joint annulaire qui vient se loger dans une gorge périphérique de chaque piston.

Dans cette application qui concerne la commande des mâchoires d'un frein à tambours, l'utilisation de j oints à lèvre donnent entièrement satisfaction.

Par contre, un joint à lèvre peut présenter un inconvénient majeur qui est son prix de fabrication élevé. En effet, les performances exigées par certains fabricants conduisent à donner une forme particulière à ce joint qui nécessite, en général, un moule en au moins trois parties pour sa fabrication.

Pour abaisser le coût de fabrication d'un tel joint à lèvre, une solution pourrait consister à utiliser un simple joint torique par exemple. En effet, un joint torique peut être fabriqué à partir d'un moule en deux parties, ce qui présente de nombreux avantages, à savoir un temps de cycle de moulage qui est court, des opérations de démoulage rapides, une cadence de production élevée et, par conséquent, un coût de fabrication du joint qui est réduit.

Or, l'expérience montre qu'un simple joint torique pour assurer l'étanchéité dans un dispositif de commande hydraulique du type précité ne donne pas satisfaction, comme cela sera explicité plus loin.

Le but de l'invention est de concevoir un joint d'étanchéité annulaire qui puisse présenter les mêmes performances qu'un joint à lèvre mais dont le coût de fabrication soit notablement réduit.

A cet effet, l'invention propose un procédé pour assurer l'étanchéité entre deux pièces coaxiales d'un dispositif de commande hydraulique par exemple, l'une des pièces étant mobile en translation par rapport à l'autre pièce sous l'action exercée par un fluide sous pression, le procédé consistant à fabriquer un joint d'étanchéité annulaire ayant une lèvre annulaire qui comporte un angle vif ou arête, et à le monter entre les deux pièces et étant caractérisé en ce qu'il consiste :
- à fabriquer le joint dans un moule en deux parties, avec des angles de dépouille mais sans contre-dépouilles, selon un plan de joint perpendiculaire à l'axe du j oint, ledit joint présentant une surface annulaire interne tronconique qui forme un certain angle avec l'axe du joint, et
- à monter le joint dans une gorge périphérique de l'une des deux pièces en le déformant par roulage sur lui-même de manière à compenser l'angle précité.

Ainsi, un tel joint présente des performances comparables à celles d'un joint à lèvre qui serait monté sans subir une telle déformation mais nécessiterait une fabrication dans un moule soit en deux parties mais avec présence de contre-dépouilles, soit en au moins trois parties pour éviter ces contre-dépouilles.

Selon un premier mode opératoire, le procédé consiste à fabriquer le joint d'étanchéité dans un moule en deux parties avec des angles de dépouille mais sans contre-dépouilles, de manière à ce que ledit joint comprenne globalement de part et d'autre du plan de joint :
- une première partie massique annulaire qui présente une surface annulaire interne tronconique qui forme l'angle précité avec l'axe du joint, et
- une seconde partie massique annulaire qui comprend la lèvre annulaire qui est orientée vers l'intérieur en direction de l'axe du joint.

Avantageusement, le plan de joint du moule est perpendiculaire à l'axe du joint et passe par les première et seconde parties massiques dudit joint.

Selon un second mode opératoire, le procédé consiste à fabriquer le joint d'étanchéité dans un moule en deux parties avec des angles de dépouille mais sans contre-dépouilles, de manière à ce que ledit joint comprenne globalement de part et d'autre du plan de joint :
- une première partie massique annulaire qui présente une surface annulaire interne tronconique qui forme l'angle précité avec l'axe du joint,
- une seconde partie massique annulaire qui délimite avec la première partie massique la lèvre annulaire qui s'étend radialement vers l'extérieur et qui présente un angle vif ou arête vers son extrémité libre autour de sa surface périphérique externe.

Avantageusement, le plan de joint du moule est perpendiculaire à l'axe du joint et partage la lèvre en deux parties.

Quel que soit le mode opératoire choisi, le procédé consiste à monter le joint dans une gorge périphérique de l'une des deux pièces du dispositif de commande hydraulique en le déformant par rotation ou roulage sur lui-même pour compenser l'angle précité, de manière à ce que la surface annulaire interne tronconique du joint prenne une forme annulaire sensiblement cylindrique pour venir en contact avec le fond annulaire de la gorge, à ce que l'arête ou angle vif de la lèvre vienne sensiblement au contact de la seconde pièce, et à ce que la lèvre subisse une légère flexion vers la première partie massique tout en conservant une raideur suffisante.

Avantageusement, le procédé consiste à donner une forme inclinée au fond annulaire de la gorge de réception du joint par rapport à l'axe dudit joint, de l'ordre de 3° à 20° par exemple, pour obtenir un fléchissement de la lèvre au contact de l'autre des deux pièces du dispositif de commande hydraulique.

L'invention concerne également une application du procédé pour assurer l'étanchéité entre deux pièces mobiles l'une par rapport à l'autre dans un dispositif de commande hydraulique des mâchoires de frein à tambours d'un véhicule automobile par exemple.

Le procédé de fabrication et de montage d'un joint selon l'invention permet d'obtenir des joints à faible prix de revient et avec une fréquence de fabrication élevée, du fait que le moule utilisé est en deux parties seulement et sans contre-dépouilles, ce qui réduit la durée du cycle de moulage et facilite les opérations de démoulage.

D'autres caractéristiques, avantages et détails de l'invention ressortiront de la description explicative qui va suivre en référence aux dessins annexés, donnés uniquement à titre d'exemple et dans lesquels :
- la figure 1 est une vue schématique et partielle d'un dispositif de commande hydraulique des mâchoires d'un frein à tambours pour un véhicule automobile,
- la figure 2 est une demi-vue en coupe d'un joint d'étanchéité à lèvre qui est utilisé, d'une façon connue en soi, dans le dispositif de commande hydraulique illustré sur la figure 1,
- la figure 3 est une demi-vue en coupe du joint illustré sur la figure 2, une fois monté dans le dispositif de commande hydraulique de la figure 1,
- les figures 3a et 3b illustrent schématiquement les opérations de moulage et de démoulage lors de la fabrication du joint représenté sur la figure 2,
- la figure 4 est une demi-vue en coupe d'un premier mode de réalisation d'un joint d'étanchéité selon l'invention pour illustrer sa forme avant son montage,
- les figures 5a, 5b et 5c illustre de façon schématique le procédé de montage du joint illustré sur la figure 4 dans le dispositif de commande hydraulique de la figure 1,
- la figure 6 est une demi-vue en coupe d'un second mode de réalisation d'un joint d'étanchéité selon l'invention pour illustrer sa forme avant son montage, et
- la figure 7 est une demi-vue en coupe pour illustrer la forme du joint de la figure 6 une fois monté dans le dispositif de commande hydraulique de la figure 1.

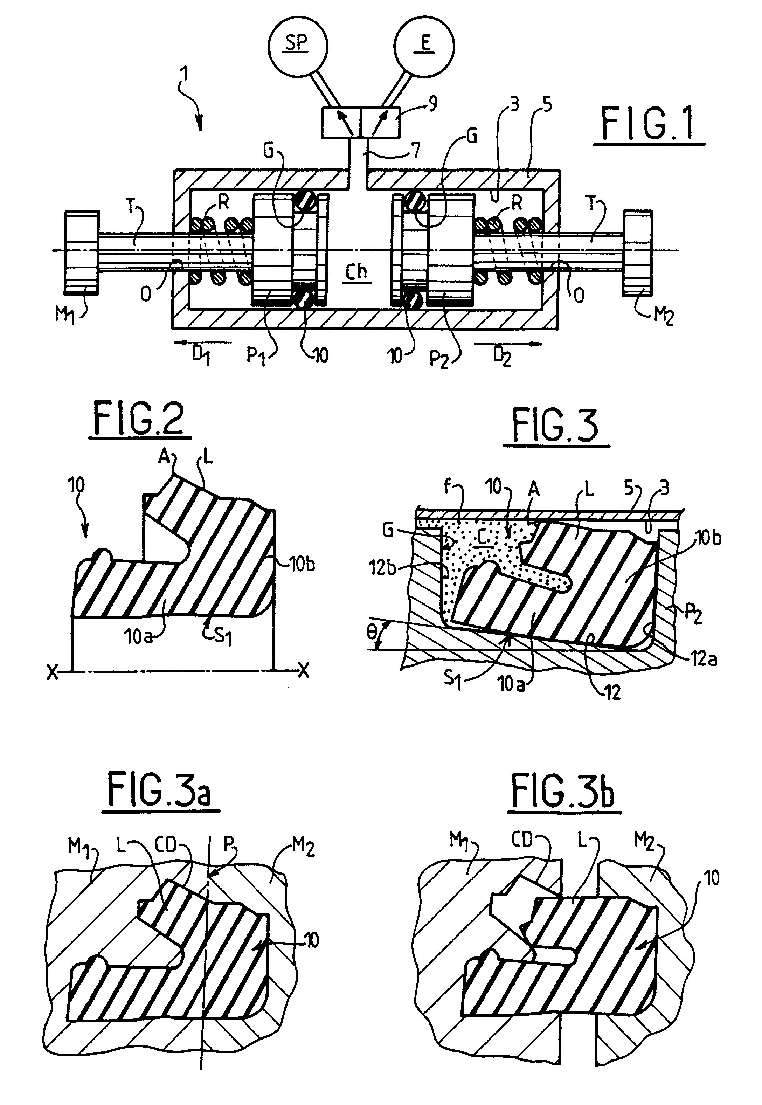

Le dispositif de commande hydraulique 1 tel que schématiquement illustré sur la figure 1 comprend deux pistons P1 et P2 axialement alignés et montés coulissant à l'intérieur de l'alésage 3 d'un cylindre 5.

Les deux pistons P1 et P2 délimitent entre eux une chambre Ch à volume variable à l'intérieur du cylindre 5. Un conduit 7 débouche en permanence dans la chambre Ch. Une soupape à tiroir 9 par exemple interposée dans le conduit 7 permet de mettre en communication la chambre Ch soit avec une source de fluide sous pression SP, soit avec l'échappement E.

Chaque piston P1 et P2 se prolonge axialement par une tige T qui fait saillie à l'extérieur du cylindre 5 par une ouverture O ménagée dans chaque paroi de fond du cylindre 5. Chaque tige T peut venir en appui sur une mâchoire M1 ou M2 d'un frein à tambours, les deux mâchoires M1 et M2 étant articulées l'une à l'autre autour d'un axe (non représenté), d'une façon connue en soi.

Un ressort de rappel R est par exemple monté autour de chaque tige T à l'intérieur du cylindre 5, et les deux extrémités de chaque ressort R prennent respectivement appui sur le piston P1 ou P2 et sur l'une des parois de fond du cylindre 5.

En fonctionnement, la chambre Ch est mise en communication par la soupape 9 avec la source de fluide sous pression SP. Il en résulte une augmentation de la pression ou montée en pression dans la chambre Ch qui va provoquer un déplacement simultané des deux pistons P1 et P2 suivant deux directions opposées D1 et D2, c'est-à-dire que les deux pistons P1 et P2 s'écartent l'un de l'autre pour commander l'actionnement des mâchoires M1 et M2 par l'intermédiaire des tiges T, tout en comprimant les ressorts R.

Dans cette application et à titre d'exemple, les deux pistons P1 et P2 se déplacent sur une longueur de l'ordre de quelques millimètres, et ce déplacement est obtenu par suite d'une montée en pression de l'ordre de quelques bars dans la chambre Ch. La montée en pression se poursuit ensuite pour atteindre quelques dizaines de bars.

Pour relâcher les mâchoires M1 et M2 du frein, la chambre Ch est mise en communication par la soupape 9 avec l'échappement E. Il en résulte une diminution de la pression ou descente en pression dans la chambre Ch qui va provoquer un déplacement simultané des deux pistons P1 et P2 dans deux directions opposées aux deux directions D1 et D2, c'est-à-dire que les deux pistons P1 et P2 vont se rapprocher l'un de l'autre par suite de la détente des ressorts de rappel R.

Bien entendu, un tel dispositif de commande hydraulique ne peut fonctionner qu'à la condition de prévoir une étanchéité au niveau de la chambre Ch.

Comme cela a déjà été évoqué en préambule, un joint d'étanchéité annulaire 10 ou joint à lèvre tel que celui illustré en demi-coupe axiale sur la figure 2 donne entièrement satisfaction.

D'une manière générale, le joint 10 est en un matériau élastiquement déformable, tel du caoutchouc par exemple.

Le joint 10 comprend globalement :
- une partie massique annulaire interne 10a qui présente une surface annulaire interne de forme cylindrique S1 qui s'étend parallèlement à l'axe X-X du joint,
- une partie massique annulaire externe 10b qui comprend une lèvre d'étanchéité annulaire L qui s'étend obliquement en délimitant une gorge annulaire G1 avec la partie massique annulaire 10a.

Selon une particularité de ce joint 10, la lèvre L présente un angle vif ou arête A vers son extrémité libre et tout autour de sa surface périphérique externe, cette arête A pointant radialement vers l'extérieur.

Lorsque le joint 10 sort du moule de fabrication, il peut être directement monté dans la gorge G du piston P2, comme cela est illustré sur la figure 3. Plus précisément, la gorge G présente une paroi de fond 12, une paroi latérale 12a et une paroi latérale 12b.

Lorsque le joint 10 est monté dans la gorge G du piston P2 :
- la surface annulaire inerne S1 de la partie massive 10a du joint 10 vient au contact de la paroi annulaire de fond 12 de la gorge G qui est généralement inclinée suivant un angle θ, de l'ordre de 5° par exemple, par rapport à l'axe X-X du joint,
- la partie massive 10b du joint 10 vient sensiblement en appui contre le paroi latérale 12a de la gorge G, et
- la lèvre L qui est venue par son arête A au contact de la surface interne du cylindre 5 s'est déformée par flexion en direction de la partie massique 10a du joint 10, notamment du fait de l'inclinaison du fond 12 de la gorge G.

Après montage, la paroi 12b de la gorge G est adjacente à la chambre Ch du cylindre 5, si bien qu'en fonctionnement le fluide f vient remplir la cavité annulaire c délimitée à l'intérieur de la gorge G par la partie massique 10a et la lèvre L du joint 10.

Un tel joint 10 présente notamment les caractéristiques suivantes :
- le joint 10 ne tourne pas sur lui-même lors de la montée et de la descente en pression dans la chambre Ch,
- la lèvre L reste toujours en contact avec l'alésage 3 du cylindre 5 compte tenu de sa flexion,
- la lèvre L assure un effet de raclage lors de la descente en pression, et
- la lèvre L présente une surface de contact avec le cylindre 5 qui est suffisamment faible pour limiter au maximum l'effet de l'abrasion lorsque le piston se déplace lors de la montée en pression et de la descente en pression d'une part, et limiter l'effort nécessaire au déplacement du piston d'autre part.

Ainsi, la lèvre L du joint 10 doit pouvoir subir une flexion tout en présentant une raideur suffisante qui soit compatible avec un bon effet de raclage et sans provoquer un effet d'abrasion de la lèvre.

Pour fabriquer ce joint 10, on peut envisager un moule soit en deux parties soit en au moins trois parties.

Compte tenu de la forme du joint 10 et si on veut le fabriquer avec un moule en deux parties, le joint 10 devra subir une déformation lors de l'opération de démoulage, c'est-à-dire que le moule présentera nécessairement des contre-dépouilles, car il n'est pas possible de définir un plan de joint tel que ces contre-dépouilles puissent être supprimées du fait de la forme du joint.

Un tel inconvénient est schématiquement illustré sur les figures 3a et 3b. Sur la figure 3a, on a représenté l'opération de moulage avec les deux parties M1 et M2 d'un moule qui définissent un plan de joint P, mais avec la présence d'au moins une contre-dépouille CD au niveau de la surface périphérique externe de la lèvre L. Sur la figure 3b, on a représenté l'opération de démoulage où les deux parties M1 et M2 du moule sont écartées l'une de l'autre, ce qui entraîne nécessairement une déformation de la lèvre L du joint au niveau de la contre-dépouille CD.

Un moule en au moins trois parties permettrait de supprimer les contre-dépouilles, mais le coût de fabrication du moule impliquerait des prix de revient des joints qui seraient plus élevés du fait de l'augmentation de la durée du cycle de moulage et des opérations de démoulage.

Si on remplaçait le joint 10 par un simple joint torique, comme cela est illustré sur la figure 1, on pourrait réduire le coût de fabrication en utilisant un moule en deux parties et sans contre-dépouille pour réduire la durée d'un cycle de moulage et avoir des opérations de démoulage plus rapides.

Cependant, l'expérience a montré qu'un joint torique ne permet pas d'assurer l'étanchéité dans de bonnes conditions. En effet, lors de la montée et de la descente en pression, le joint tourne sur lui-même, ce qui est générateur de fuites, et l'effet de raclage pendant la descente en pression n'est pas assuré.

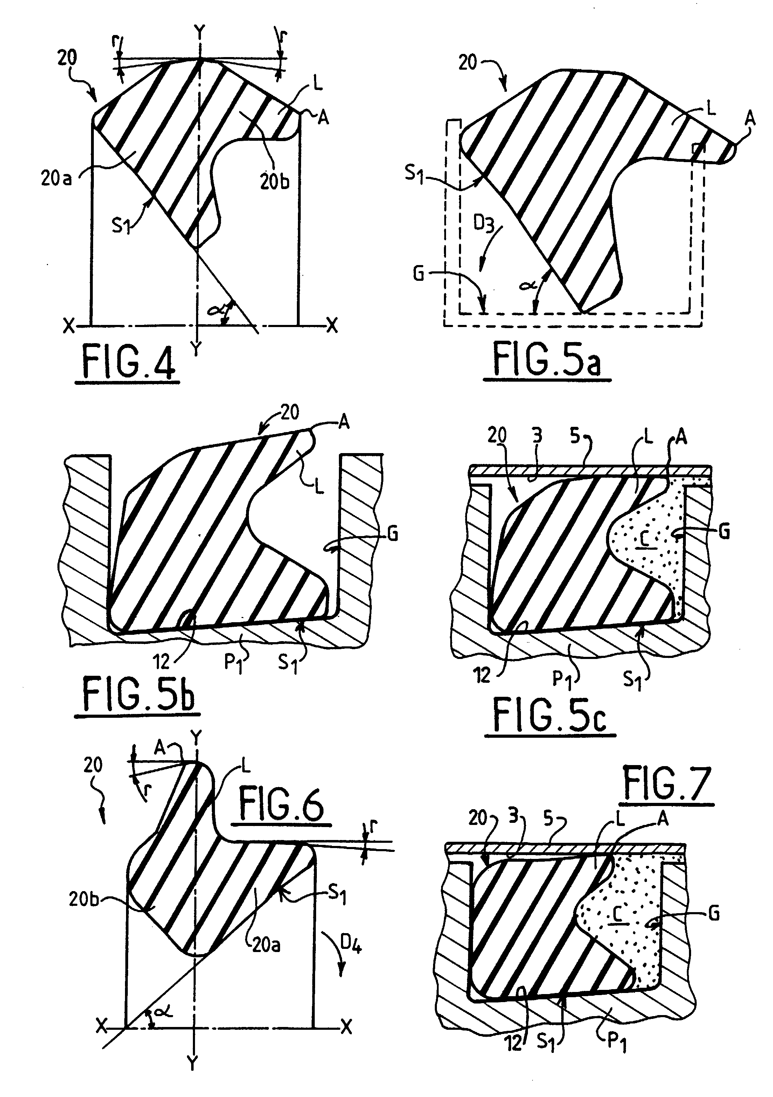

Par contre, le joint d'étanchéité 20 illustré sur la figure 4 selon un premier mode de réalisation de l'invention a une forme qui permet de le fabriquer avec un moule en deux parties et sans contre-dépouille, tout en présentant des performances globalement semblables à celles du joint à lèvre 10 illustré sur les figures 2 et 3.

En effet, il est possible de définir un plan de joint Y-Y tel qu'il n'est pas nécessaire de prévoir des contres-dépouilles, c'est-à-dire que le joint 20 pourra être démoulé rapidement et sans subir de déformation.

Après moulage, le joint 20 réalisé en un matériau élastiquement déformable comprend globalement de part et d'autre du plan de joint Y-Y :
- une première partie massique annulaire 20a qui présente une surface annulaire interne tronconique dite surface de référence S1 qui forme un angle a avec l'axe X-X du joint, et
- une seconde partie massique annulaire 20b qui comprend la lèvre annulaire L qui est orientée en direction de l'axe X-X du joint.

Le plan de joint Y-Y du moule qui est perpendiculaire à l'axe X-X du joint 20 passe par exemple au travers des parties massiques 20a et 20b.

D'une manière générale, on donne à l'angle a une valeur de l'ordre de 30° à 70° par exemple, et on fabrique le joint 20 de manière à ce que la surface périphérique externe de la lèvre L fasse un angle de l'ordre de 5 à 50°, par exemples 30°, par rapport à l'axe X-X du joint.

Sur la figure 5a, on a représenté le joint 20 issu de fabrication dans la position qu'il occuperait si on le montait tel quel dans la gorge G du piston P1 par exemple.

On constate que le joint 20 n'est pas correctement positionné dans la gorge G, en particulier au niveau de la lèvre L. Il est donc nécessaire de le déformer au montage pour qu'il occupe la position illustrée sur la figure 5b.

Concrètement, le joint 20 est déformé en le faisant rouler sur lui-même, de manière à ce que la surface tronconique de référence S1 puisse se déformer par rotation suivant la direction D3 et d'un angle sensiblement égal à l'angle α pour compenser cet angle et amener cette surface S1 en contact avec le fond annulaire 12 de la gorge G du piston P2, comme cela est illustré sur la figure 5b. On constate alors que le joint 20 prend une forme qui correspond sensiblement à celle du joint 10 illustré sur la figure 2, c'est-à-dire que la surface annulaire tronconique S1 a pris la forme d'une surface annulaire sensiblement cylindrique autour de l'axe X-X du joint, et avec son arête A qui pointe radialement vers l'extérieur. Il est important de noter que la déformation du joint 20 n'a pas pour but d'obtenir un effet de torsion, même si cet effet existe quelque peu.

Lorsque le piston P1 équipé de son joint 20 est monté dans l'alésage du cylindre 5, la lèvre L subit une légère flexion, comme dans le cas du joint 10 illustré sur la figure 3.

Selon un second mode de réalisation illustré sur la figure 6, le joint d'étanchéité 20 a une forme qui permet également de le fabriquer à partir d'un moule en deux parties et sans contre-dépouille, de manière à ce que ledit joint comprenne globalement de part et d'autre du plan de joint Y-Y :
- une première partie massique annulaire 20a qui présente une surface annulaire interne tronconique dite surface annulaire de référence S1 qui forme l'angle α avec l'axe X-X du joint, cet angle ayant comme précédemment une valeur de 30° à 70° par exemple,
- une seconde partie massique annulaire 20b qui délimite avec la première partie massique 20a la lèvre annulaire L qui s'étend radialement vers l'extérieur et qui présente un angle vif ou arête A vers son extrémité libre autour de sa surface périphérique externe.

Dans ce cas, le plan de joint Y-Y du moule est perpendiculaire à l'axe X-X du joint 20 et partage la lèvre L en deux parties, en passant éventuellement par l'arête A.

Comme dans le mode de réalisation illustré précédemment, le joint 20 doit être déformé de manière à ce que la surface de référence S1 de la première partie massique 10a vienne au contact du fond 12 de la gorge G après rotation du joint sur lui-même suivant la direction D4 pour compenser l'angle α. Après cette déformation, l'arête A pointe radialement vers l'extérieur, et la lèvre L fléchit ensuite en direction de la partie massique 10a du joint après montage du piston dans le cylindre 5.

A cet effet, le fond 12 de la gorge G sur les figures 5b, 5c et 7 est avantageusement incliné d'un angle de l'ordre de 3° à 20°, comme dans le cas de la figure 3.

D'une manière générale, les moules utilisés pour fabriquer les joints illustrés aux figures 4 et 6 présentent des angles de dépouille r de 2° à 3° par exemple, pour éviter tout blocage par adhérence et/ou déformation des joints au démoulage.

Bien entendu, l'invention peut être utilisée dans d'autres applications que celle qui a été envisagée précédemment dans le cas d'un dispositif de commande hydraulique des mâchoires d'un frein à tambours.

## Revendications

1. Procédé pour assurer l'étanchéité entre deux pièces coaxiales d'un dispositif de commande hydraulique par exemple, l'une des pièces (P1) étant mobile en translation par rapport à l'autre pièce (5) sous l'action exercée par un fluide sous pression, le procédé consistant à fabriquer un joint d'étanchéité annulaire (20) ayant une lèvre annulaire (L) qui comporte un angle vif ou arête (A), et à le monter entre les deux pièces (P1,5) et étant caractérisé en ce qu'il consiste :
- à fabriquer le joint (20) dans un moule en deux parties, avec des angles de dépouille (r) mais sans contre-dépouilles, selon un plan de joint (Y-Y) perpendiculaire à l'axe (X-X) du joint (20), ledit joint (20) présentant une surface annulaire interne tronconique (S1) qui forme un angle (α) avec l'axe (X-X) du joint, et
- à monter le joint (20) dans une gorge périphérique (G) de l'une des deux pièces (P1) en le déformant par roulage sur lui-même de manière à compenser l'angle (α) précité.

2. Procédé selon la revendication 1, caractérisé en ce qu'il consiste à fabriquer le joint d'étanchéité (20) dans un moule en deux parties de manière à ce que ledit joint comprenne globalement de part et d'autre du plan de joint (Y-Y) :
- une première partie massique annulaire (20a) qui présente une surface annulaire interne tronconique dite surface de référence (S1) qui forme l'angle (α) avec l'axe (X-X) du joint, et
- une seconde partie massique annulaire (20b) qui comprend la lèvre annulaire (L) qui est orientée en direction de l'axe (X-X) du joint.

3. Procédé selon la revendication 2, caractérisé en ce que le plan de joint (Y-Y) du moule est perpendiculaire à l'axe (X-X) du joint et passe par les première et seconde parties massiques (20a,20b) dudit joint.

4. Procédé selon la revendication 2 ou 3, caractérisé en ce qu'il consiste à donner à l'angle (α) une valeur de l'ordre de 30° à 70°.

5. Procédé selon l'une quelconque des revendications 2 à 4, caractérisé en ce qu'il consiste à fabriquer le joint (20) de manière à ce que la surface périphérique externe de la lèvre (L) fasse un angle de l'ordre de 5 à 50° par rapport à l'axe (X-X) du joint.

6. Procédé selon la revendication 1, caractérisé en ce qu'il consiste à fabriquer le joint d'étanchéité (20) dans un moule en deux parties de manière à ce que ledit joint comprenne globalement de part et d'autre du plan de joint (Y-Y) :
- une première partie massique annulaire (20a) qui présente une surface annulaire interne tronconique dite surface annulaire de référence (S1) qui forme l'angle (α) avec l'axe (X-X) du joint,
- une seconde partie massique annulaire (20b) qui délimite avec la première partie massique (20a) la lèvre annulaire (L) qui s'étend radialement vers l'extérieur et qui présente un angle vif ou arête (A) vers son extrémité libre autour de sa surface périphérique externe.

7. Procédé selon la revendication 6, caractérisé en ce que le plan de joint (Y-Y) du moule est perpendiculaire à l'axe (X-X) du joint et partage la lèvre (L) en deux parties.

8. Procédé selon l'une quelconque des revendications précédentes, caractérisé en ce qu'il consiste à monter le joint (20) dans une gorge périphérique (G) de l'une des deux pièces (P1) du dispositif de commande hydraulique en le déformant par rotation sur lui-même pour compenser l'angle (α), de manière à ce que la surface de référence tronconique (S1) de la première partie massique (20a) du joint prenne une forme annulaire sensiblement cylindrique pour venir en contact avec le fond annulaire (12) de la gorge (G), à ce que l'arête ou angle vif (A) de la lèvre (L) vienne sensiblement au contact de la seconde pièce (5), et à ce que la lèvre (L) subisse une légère flexion vers la première partie massique (20a) tout en conservant une raideur suffisante.

9. Procédé selon la revendication 8, caractérisé en ce qu'il consiste à donner une forme inclinée au fond annulaire (12) de la gorge (G) par rapport à l'axe (X-X) du joint, de l'ordre de 3° à 20° par exemple, pour obtenir un fléchissement de la lèvre (L).

10. Application du procédé selon l'une quelconque des revendications précédentes pour assurer l'étanchéité entre deux pièces mobiles l'une par rapport à l'autre dans un dispositif de commande hydraulique des mâchoires de frein à tambours d'un véhicule automobile par exemple.
